# EUROPÄISCHE PATENTSCHRIFT

(11) **EP 3 233 408 B1**
(45) Veröffentlichungstag und Bekanntmachung des Hinweises auf die Patenterteilung: **24.07.2019**
(21) Anmeldenummer: 15819788.9
(22) Anmeldetag: 03.12.2015
(51) Int. Cl.: B29C 45/16, B29C 45/27, B29D 11/00, G02B 1/04, B29L 11/00, B29C 45/00, B29C 45/26

(54) **VERFAHREN ZUR HERSTELLUNG EINER MEHRSCHICHTIGEN KUNSTSTOFF-LINSE**
METHOD FOR PRODUCING A MULTILAYERED PLASTIC LENS
PROCÉDÉ DE FABRICATION D'UNE LENTILLE EN PLASTIQUE MULTICOUCHES

(30) Priorität: 16.12.2014 DE 102014018495
(43) Veröffentlichungstag der Anmeldung: 25.10.2017
(73) Patentinhaber: Gebr. Krallmann GmbH, 32120 Hiddenhausen (DE)
(72) Erfinder: KRALLMANN, Rainer, 32120 Hiddenhausen (DE)
(74) Vertreter: Lichti - Patentanwälte Partnerschaft mbB
(86) Internationale Anmeldenummer: PCT/EP2015/002431
(87) Internationale Veröffentlichungsnummer: WO 2016/096096

(56) Entgegenhaltungen:
- EP-A1- 2 402 140
- WO-A1-2011/061638
- WO-A1-2012/111381
- WO-A1-2012/132597
- DE-A1-102014 004 766
- FR-A1- 2 861 640

## Beschreibung

Die Erfindung betrifft ein Verfahren zur Herstellung einer mehrschichtigen Kunststoff-Linse gemäß Anspruch 1. Seit einiger Zeit wird versucht, optische Bauteile, beispielsweise eine Linse statt aus Glas aus Kunststoff herzustellen, da sich Kunststoff leichter verarbeiten lässt und insbesondere kostengünstiger ist. Wenn das optische Bauteil bzw. die Kunststoff-Linse jedoch eine relativ große Dicke aufweist, wie es beispielsweise bei einer Bi-Konvex-Linse der Fall ist, kann das Problem auftreten, dass sich während der Abkühlungsphase des Kunststoffes, die in den Außen- und Randbereichen schneller als im Kern der Linse erfolgt, mechanische Beschädigungen infolge thermischer Spannungen und zumindest Veränderungen der optischen Eigenschaften der Linse ergeben. Um dies zu vermeiden, ist es aus der WO2012/111381 A1 bekannt, eine entsprechende Linse aus nacheinander aufgebrachten Schichten aus einem einheitlichen Kunststoff-Material aufzubauen. Zu diesem Zweck wird beispielsweise in einer 1. Kavität ein Grundelement aus einem Kunststoff-Material gespritzt. Sobald dieses Grundelement eine ausreichende Festigkeit aufweist, wird das Spritzguss-Werkzeug geöffnet und so verstellt, dass das Grundelement in einer 2. Kavität angeordnet ist, in der eine 2. Schicht aus dem Kunststoff-Material angespritzt wird, wobei die das Grundelement bildende 1. Schicht und die angespritzte 2. Schicht sich zu einem einheitlichen monolithischen Bauteil verbinden. An dieses können in nachfolgenden Arbeitsschritten in entsprechenden Kavitäten eine 3. Schicht, eine 4. Schicht etc. angespritzt werden, die alle aus dem gleichen Kunststoff-Material bestehen. Insgesamt offenbart dieses Dokument ein Verfahren zur Herstellung einer mehrschichtigen Kunststoff-Linse, wobei mehrere Zwischenschichten eines Kunststoffmaterials nacheinander in einer Spritzguss-Vorrichtung an ein Grundteil in unterschiedlichen Kavitäten angespritzt werden, wobei zumindest einige der Kavitäten ein gemeinsames 1. Angusssystem mit einer gemeinsamen Materialzuführung aufweisen, wobei anschließend mittels eines 2. Angusssystems zumindest eine äußere Schicht aus einem Kunststoffmaterial in einer weiteren Kavität angespritzt wird, wobei jeder Kavität ein Spritzkanal zugeordnet ist, durch den das Kunststoff-Material in die Kavität eingebracht wird, wobei das 2. Angusssystem eine zumindest zum Teil eigene Materialzuführung aufweist.

Besonders schwierig ist es dabei, einen wirtschaftlichen kontinuierlichen Herstellungsprozess zu erreichen, da die unterschiedlichen Schichten unterschiedlich groß und dick sind und somit auch unterschiedliche Verfestigungszeiten und Spritzparameter erfordern. Es hat sich gezeigt, dass die Herstellung einer mehrschichtigen, monolithischen optischen Kunststoff-Linse üblicherweise sehr zweitaufwändig und damit kostenintensiv ist.

In der EP 2 402 140 A1 ist vorgesehen, jeden Spritzgussvorgang für sich individuell zu steuern bzw. zu regeln. Weitere Angaben zu den zu steuernden Parametern oder zum Ort dieser Steuerung sind jedoch nicht gemacht.

Die WO2011/061638 A1 betrifft die Erzielung von vorgegebenen Temperatur-Bereichen für die Herstellung der aufeinander folgenden Schichten, wobei die Temperatur jeder Schicht in der Injektions-Phase niedriger als die Temperatur der vorhergehenden Schicht in der Injektions-Phase ist. Zu diesem Zweck werden Kühlvorrichtungen eingesetzt.

Aus der DE 10 2014 004 766 A1 ist ein Verfahren zum Herstellen eines optischen Elementes bekannt, wobei an wenigstens zwei Spritzstationen eine Spritzmasse mittels wenigstens zweier Spritzvorgänge gegossen wird. Ein Vorspritzling, der in wenigstens einem der Spritzvorgänge hergestellt wird, wird zwischen den Spritzvorgängen in einer Kühlstation gekühlt.

Der Erfindung liegt die Aufgabe zugrunde, ein Verfahren zur Herstellung einer mehrschichtigen Kunststoff-Linse zu schaffen, mit dem sich eine entsprechende Kunststoff-Linse schnell und kostengünstig in guter Qualität herstellen lässt.

Diese Aufgabe wird durch ein Verfahren mit den Merkmalen des Anspruchs 1 gelöst. Dabei werden zunächst mehrere Zwischenschichten eines Kunststoff-Materials nacheinander in einer Spritzguss-Vorrichtung an ein Grundelement in unterschiedlichen Kavitäten angespritzt, wobei zumindest einige der Kavitäten ein gemeinsames 1. Angusssystem mit einer gemeinsamen Materialzuführung aufweisen. Bei dem 1. Angusssystem handelt es sich üblicherweise um ein sogenanntes Heißkanalsystem, wie es beim maschinellen Spritzgießen von Kunststoffen und insbesondere Thermo-plasten üblich ist und das gegenüber dem restlichen Spritzgusswerkzeug thermisch isoliert und höher temperiert ist.

Der Erfindung liegt die Erkenntnis zugrunde, dass die Verfahrensparameter, mit denen die Zwischenschichten aufgebracht bzw. aufgespritzt werden, für die optische Qualität der fertigen Kunststoff-Linse nicht entscheidend sind, sondern dass es für die optischen Eigenschaften der Kunststoff-Linse wesentlich ist, dass die äußere Schicht mit optimierten Verfahrensparametern ausgebildet und aufgebracht wird. Erfindungsgemäß ist deshalb vorgesehen, nach der Aufbringung der Zwischenschichten zumindest die äußere Schicht aus einem Kunststoff-Material in einer Kavität mittels eines 2. Angusssystems anzuspritzen, bei dem es sich vorzugsweise ebenfalls um ein Heißkanalsystem handelt. Das 2. Angusssystem weist eine eigene Materialzuführung und eine eigene Steuerung auf. Aufgrund der eigenen Materialzuführung und der eigenen Steuerung des 2. Angusssystems können die Verfahrensparameter, mit denen die äußere Schicht der Linse gespritzt wird, einerseits genau auf die verfahrenstechnischen Rahmenbedingungen eingestellt werden und andererseits lassen sich diese Verfahrensparameter unabhängig von denjenigen Verfahrensparametern einstellen, mit denen die Zwischenschichten und gegebenenfalls das Grundelement hergestellt bzw. gespritzt werden.

Gemäß der Erfindung ist jeder Kavität ein Spritzkanal zugeordnet, durch den die jeweilige Masse des Kunststoff-Materials in die Kavität eingebracht wird. Dabei werden der Druck und die Temperatur des Kunststoff-Materials in zumindest einigen der Spritzkanäle und vorzugsweise in allen Spritzkanälen jeweils individuell und unabhängig voneinander gesteuert und eingestellt. Dabei kann vorgesehen sein, dass die Steuerung des 2. Angusssystems eine Temperatur-Steuervorrichtung für die Temperatur des zugeführten und eingespritzten Kunststoff-Materials und eine Druck-Steuervorrichtung aufweist, mit der sich der Druck einstellen lässt, mit dem das Kunststoff-Material in die Kavität eingespritzt wird.

Die Kunststoff-Linse weist ein trägerartiges Grundteil auf, an das in den Kavitäten des 1. Angusssystems nacheinander die Zwischenschichten übereinanderliegend angespritzt werden. Das Grundelement kann vorgefertigt sein, vorzugsweise ist jedoch vorgesehen, dass es in das Herstellungsverfahren integriert und in einem 1. Schritt des Verfahrens in einer Grundteil-Kavität, die vorzugsweise Teil des 1. Anguss-systems ist, ausgebildet wird. Dabei besteht das Grundteil vorzugsweise aus dem gleichen Kunststoff-Material wie die Zwischenschichten, die nachfolgend in dem 1. Angusssystem aufgespritzt werden.

Die Zwischenschichten können an das Grundteil einseitig nacheinander angespritzt und abschließend von der äußeren Schicht überdeckt werden. Eine derartige Kunststoff-Linse ist einerseits von dem Grundteil und andererseits von der äußeren Schicht begrenzt, die je nach Licht-Eintrittsrichtung auf der Licht-Eintritts- bzw. Licht-Austrittsseite angeordnet sind.

Alternativ ist es möglich, zumindest einige der Zwischenschichten und vorzugsweise alle Zwischenschichten in Form von zwei Teilschichten jeweils auf entgegengesetzten Seiten des Grundteils bzw. eines aus dem Grundteil und zumindest einer Zwischenschicht bestehenden Rohlings aufzuspritzen. Die 1. Zwischenschicht wird von entgegengesetzten Seiten auf das Grundteil aufgespritzt. In einem nachfolgenden Verfahrensschritt wird auch die 2. Zwischenschicht von entgegengesetzten Seiten auf die im vorhergehenden Verfahrensschritt ausgebildete vorherige 1. Zwischenschicht aufgespritzt. Dieses Vorgehen wird solange durchgeführt, bis alle Zwischenschichten in Form von zwei Teil-Schichten auf jeweils entgegengesetzten Seiten auf den im vorherigen Verfahrensschritt ausgebildeten Rohling aufgespritzt sind. Abschließend wird auch die äußere Schicht im 2. Anguss-system von entgegengesetzten Seiten auf den in den vorherigen Verfahrensschritten ausgebildeten Rohling, der das Grundteil und die beidseitig aufgespritzten Zwischenschichten umfasst, aufgespritzt, so dass die Kunststoff-Linse auf ihrer Licht-Eintritts- und ihrer Licht-Austrittsseite jeweils eine Teil-Schicht der äußeren Schicht aufweist.

In einer bevorzugten Ausgestaltung der Erfindung ist vorgesehen, dass alle Zwischenschichten und gegebenenfalls auch das Grundteil in den Kavitäten des 1. Angusssystems und lediglich die äußere Schicht der Kunststoff-Linse (einseitig oder beidseitig) in dem 2. Angusssystem gespritzt bzw. hergestellt wird.

Alternativ ist es jedoch auch möglich, dass mittels des 2. Angusssystems die äußere Schicht und zumindest eine darunterliegende Zwischenschicht der Kunststoff-Linse gespritzt wird.

Vorzugsweise bestehen das Grundteil, alle Zwischenschichten und die äußere Schicht aus dem gleichen Kunststoff-Material, es ist jedoch auch möglich, die äußere Schicht aus einem anderen oder zumindest leicht modifizierten Kunststoff-Material auszubilden.

Dabei kann vorgesehen sein, dass die in die einzelnen Kavitäten des 1. Angusssystems eingebrachten Massen des Kunststoff-Materials voneinander um max. ± 10% und insbesondere um max. ± 5% und besonders bevorzugt um lediglich max. ± 1% abweichen. Dabei wird von der Grundüberlegung ausgegangen, die Volumina der einzelnen Zwischenschichten und somit die jeweils zur Ausbildung der einzelnen Zwischenschichten einzubringenden Massen des Kunststoff-Materials möglichst gleich oder zumindest nur mit geringen Abweichungen vorzusehen. Dies ermöglicht es, die Zwischenschichten in einem kontinuierlichen Fertigungsprozess in dem 1. Angusssystem zeitgleich auszubilden, da die für die jeweiligen Zwischenschichten notwendigen Massen an Kunststoff-Material sehr ähnlich oder identisch sind oder somit ähnliche oder identische Spritzgussparameter und insbesondere Verfestigungszeiten besitzen. Da die einzelnen Kavitäten unterschiedliche Geometrien besitzen, kann die Einbringung des eingespritzten, flüssigen Kunststoff-Materials in die Kavität durch eine Steuerung des Einspritzdrucks erreicht werden. Zu diesem Zweck kann erfindungsgemäß vorgesehen sein, dass der Druck des Kunststoff-Materials in zumindest einigen der Spritzkanäle und insbesondere in allen Spritzkanälen des 1. Angusssystems individuell und unabhängig voneinander gesteuert werden kann, so das ein optimierter Einspritzvorgang erreicht ist.

Vorzugsweise wird für das erfindungsgemäße Verfahren ein sogenanntes Revolver-Spritzguss-Werkzeug verwendet, bei dem zwei Werkzeughälften in einer geöffneten Stellung relativ zueinander verdrehbar sind und somit die in den Werkzeughälften jeweils ausgebildeten Teil-Kavitäten in unterschiedlichem Zusammenwirken die jeweiligen unterschiedlichen Kavitäten bilden. Ein entsprechendes Revolver-Spritzguss-Werkzeug ist aus dem Mehr-Komponenten-Spritzgussverfahren bekannt und wird im Zusammenhang mit dem erfindungsgemäßen Verfahren vorzugsweise dafür benutzt, einen Rohling für eine optische Kunststoff-Linse mit dünnen Zwischenschichten von ca. 2 bis 3 mm nacheinander aus einem einzigen Kunststoff-Material aufzubauen.

Anschließend wird der Rohling in dem 2. Angusssystem mit einer äußeren Schicht überspritzt, wobei das 1. Angusssystem und das 2. Angusssystem in einem gemeinsamen Spritzgusswerkzeug, jedoch unabhängig voneinander ausgebildet sein können.

In bevorzugter Ausgestaltung der Erfindung ist vorgesehen, dass die Spritzkanäle, die zu den einzelnen Kavitäten des 1. Angusssystems führen, aus einem gemeinsamen Zuführkanal mit dem Kunststoff-Material versorgt werden. In dem gemeinsamen Zuführkanal steht das Kunststoff-Material unter einem vorgegebenen Druck an, der vorzugsweise höher als der Druck ist, mit dem das Kunststoff-Material in die einzelnen Kavitäten eingespritzt wird. Die Druckminderung zwischen dem Druck in dem Zuführkanal und dem eigentlichen Einspritzdruck in die jeweilige Kavität wird dadurch erreicht, dass der Druck des Kunststoff-Materials in den Spritzkanälen vermindert und an die für die jeweilige Kavität bzw. die in dieser Kavität auszubildende Zwischenschicht optimalen Wert angepasst wird. Dies kann in einer möglichen Ausgestaltung der Erfindung dadurch erreicht werden, dass der Druck des Kunststoff-Materials in den Kavitäten durch Verminderung des Querschnitts des jeweiligen Spritzkanals gesteuert wird, in dem beispielsweise in jedem Spritzkanal eine einstellbare Drosselstelle angeordnet ist.

Insbesondere bei Bildung einer konvexen Kunststoff-Linse durch nacheinander Aufbringen von unterschiedlichen Zwischenschichten ist jede Schicht jeweils großflächiger als die darunterliegende Schicht. Wenn die für die Ausbildung der einzelnen Zwischenschichten zur Verfügung stehenden Kunststoff-Massen gleich oder zumindest annähernd gleich sind, variieren die Schichten. Es hat sich in diesem Fall als vorteilhaft erwiesen, wenn erfindungsgemäß vorzugsweise vorgesehen ist, dass die einzelnen Zwischenschichten der Kunststoff-Linse mit unterschiedlichen Schichtdicken ausgebildet werden, wobei die Schichtdicke der (n+1)-ten Schicht geringer als die Schichtdicke der vorher ausgebildeten n-ten Schicht ist.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: einen Querschnitt durch eine schichtweise aufgebaute Kunststoff-Linse gemäß einem Ausführungsbeispiel,
- Fig. 2: eine schematische Darstellung einer Spritzgussvorrichtung zur Herstellung einer mehrschichtigen Kunststoff-Linse gemäß dem erfindungsgemäßen Verfahren und
- Fig. 3: eine Abwandlung der Spritzgussvorrichtung gemäß Fig. 2.

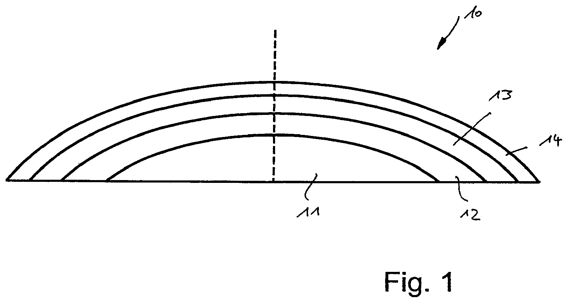

Fig. 1 zeigt einen Querschnitt durch eine mehrschichtige Kunststoff-Linse 10 gemäß einem Ausführungsbeispiel. Die Kunststoff-Linse 10 besitzt ein trägerartiges Grundteil 11, auf dem mehrere übereinander angeordnete Schichten aufgebracht sind. Auf das Grundteil 11 ist eine 1. Zwischenschicht 12 einseitig aufgespritzt. Auf die 1. Zwischenschicht 12 ist eine 2. Zwischenschicht 13 aufgebracht. Abschließend ist eine alle Zwischenschichten 12, 13 überdeckende äußere Schicht 14 aufgebracht. Alle Schichten bestehen aus dem gleichen Kunststoff-Material, so dass ein schichtweise aufgebauter, monolithischer Körper aus einem einheitlichen Material gebildet ist.

Gemäß Fig. 1 sind alle Schichten auf das Grundteil 11 nur einseitig aufgebracht, so dass die Kunststoff-Linse 10 in ihrem fertigen Zustand einerseits von dem Grundteil 11 und andererseits von der äußeren Schicht 14 begrenzt ist. In einem abgewandelten Ausführungsbeispiel können die Schichten beidseitig auf das Grundteil aufgebracht sein. Dabei kann wie beim ersten Ausführungsbeispiel ein trägerartiges Grundteil vorgesehen sein, das in einem ersten Schritt beidseitig mit dem Kunststoffmaterial der 1. Zwischenschicht versehen ist. Diese auf entgegengesetzten Seiten des Grundteils angeordneten Teil-Schichten der 1. Zwischenschicht 12 sind jeweils mit entsprechenden Teil-Schichten der 2. Zwischenschicht überdeckt. Anschließend sind nacheinander die Teil-Schichten einer 3. Zwischenschicht und einer 4. Zwischenschicht beidseitig aufgebracht. Abschließend wird auf beide Seiten des aus dem Grundteil und den Zwischenschichten gebildeten Rohlings die äußere Schicht aufgespritzt, so dass die Kunststoff-Linse auf beiden Seiten des Grundteils von einer Schichtung aus vier Zwischenschichten und einer außenseitig abdeckenden äußeren Schicht versehen ist.

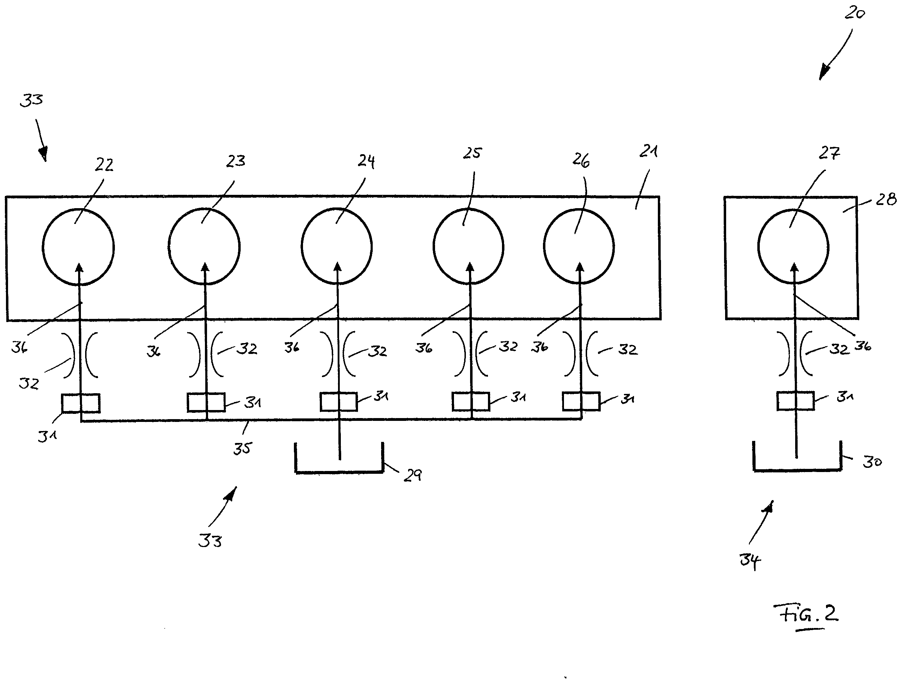

Figur 2 zeigt eine schematische Darstellung einer Spritzguss-Vorrichtung 20, mit der eine Kunststoff-Linse 10 nach dem erfindungsgemäßen Verfahren hergestellt werden kann. Die Spritzguss-Vorrichtung 20 umfasst ein Werkzeugteil 21, in dem mehrere Kavitäten, nämlich eine 1. Kavität 22, eine 2. Kavität 23, eine 3. Kavität 24, eine 4. Kavität 25 und eine 5. Kavität 26 ausgebildet sind. Beim dargestellten Ausführungsbeispiel sind die Kavitäten in einer Reihe nebeneinander angeordnet, jedoch ist es auch möglich und sogar bevorzugt, die Kavitäten über den Umfang eines drehbaren Werkzeugteils verteilt anzuordnen.

Für die Herstellung von Kunststoff-Linsen werden die Kavitäten mittels eines nicht dargestellten weiteren Werkzeugteils in üblicher Weise verschlossen und in alle Kavitäten 22, 23, 24, 25, 26 wird das gleiche Kunststoff-Material in einem sogenannten Schuss gleichzeitig eingebracht.

Die Spritzguss-Vorrichtung 20 umfasst ein 1. Anguss-System 33 und ein davon vollständig unabhängiges 2. Anguss-System 34, wobei es sich vorzugsweise jeweils um sogenannte Heißkanalsysteme handelt. Das 1. Anguss-System 33 umfasst die Kavitäten 22, 23, 24, 25 und 26 des Werkzeugteils 21.

Das Kunststoff-Material befindet sich in einem nur angedeuteten Kunststoff-Vorrat 29, von dem ein gemeinsamer Zuführkanal 35 zu den Kavitäten 22, 23, 24, 25, 26 führt. Von dem Zuführkanal 35 zweigt zu jeder Kavität ein eigener Spritzkanal 36 ab. In jedem Spritzkanal 36 ist eine Druck-Steuervorrichtung 32 in Form einer einstellbaren Drosselstelle angeordnet. Zusätzlich ist in jedem Spritzkanal 36 eine Temperatur-Steuervorrichtung 31 angeordnet, mit der die Temperatur des Kunststoff-Materials in dem jeweiligen Spritzkanal 36 gesteuert werden kann.

Ferner umfasst die Spritzguss-Vorrichtung 20 das 2. Anguss-System 34, das eine in einem Werkzeugteil 28 ausgebildete weitere 6. Kavität 27 aufweist, in die aus einem Kunststoff-Vorrat 30 über einen Spritzkanal 36 das Kunststoff-Material eingebracht werden kann. In dem Spritzkanal 36 ist ebenfalls eine Temperatur-Steuervorrichtung 31 und eine Druck-Steuervorrichtung 32 angeordnet.

Das 1. Anguss-System 33 und das 2. Anguss-System 34 können in einem gemeinsamen Spritzgusswerkzeug ausgebildet sein, es ist jedoch auch möglich, für jedes Anguss-System ein eigenes Spritzgusswerkzeug vorzusehen, wobei jedoch wesentlich ist, dass die Anguss-Systeme 33 und 34 unabhängig voneinander ansteuerbar und betreibbar sind.

Im Folgenden wird das erfindungsgemäße Verfahren zur Herstellung einer Kunststoff-Linse anhand von Figur 2 im Einzelnen erläutert.

In einer Anlaufphase des Herstellungsprozesses wird das Kunststoff-Material nur in die 1. Kavität 22 des 1. Anguss-Systems 23 gespritzt, während die anderen Kavitäten noch verschlossen sind. In der 1. Kavität 22 wird das trägerartige Grundteil 11 ausgebildet, weshalb diese Kavität als Grundteil-Kavität 22 bezeichnet wird. Anschließend wird das Werkzeug geöffnet und die Werkzeugteile werden so relativ zueinander verstellt, dass das zuvor in der 1. Grundteil-Kavität 22 gebildete Grundteil 11 sich nunmehr in der 2. Kavität 23 befindet. Nach Schließen der Werkzeugteile wird das Kunststoff-Material in die 2. Kavität 23 eingespritzt, wodurch an das Grundteil 11 die 1. Zwischenschicht 12 (einseitig oder zweiseitig) angespritzt wird, wodurch ein sogenannter 1. Rohling gebildet ist. Gleichzeitig wird auch Kunststoff-Material wiederum in die 1. Grundteil-Kavität 22 eingespritzt, wodurch ein weiteres Grundteil 11 gebildet wird. Die weiteren Kavitäten sind dabei noch verschlossen. Anschließend werden die Werkzeugteile wieder geöffnet und relativ zueinander verstellt, so dass der das Grundteil 11 und die 1. Zwischenschicht 12 umfassende 1. Rohling nunmehr in der 3. Kavität 24 und das zuvor in der 1. Grundteil-Kavität 22 gebildete Grundteil 11 nunmehr in der 2. Kavität 23 angeordnet sind. Die Werkzeugteile werden wieder geschlossen und das Kunststoffmaterial wird in die 1. Grundteil-Kavität, die 2. und die 3. Kavität, 23 und 24 eingespritzt. Dabei wird in der 1. Grundteil-Kavität 22 ein weiteres Grundteil 11 gebildet. In der 2. Kavität 23 wird an das zuvor gebildete Grundteil 11 eine 1. Zwischenschicht 12 angespritzt und in der 3. Kavität wird an den das Grundteil 11 und die 1. Zwischenschicht 12 aufweisenden 1. Rohling eine 2. Zwischenschicht 13 angespritzt, wodurch ein sogenannter 2. Rohling gebildet ist. Die 4. Kavität 25 und die 5. Kavität 26 sind dabei noch verschlossen.

Anschließend werden die Werkzeugteile wiederum geöffnet und relativ zueinander verstellt, so dass dann der aus dem Grundteil 11, der 1. Zwischenschicht 12 und der 2. Zwischenschicht 13 bestehende 2. Rohling in der 4. Kavität 25 angeordnet ist. Gleichzeitig befindet sich in der 3. Kavität 24 ein zuvor in der 2. Kavität 23 hergestellter 1. Rohling, der aus dem Grundteil 11 und der 1. Zwischen-schicht 12 besteht. In der 2. Kavität 23 befindet sich ein zuvor in der 1. Kavität 22 ausgebildetes Grundteil 11. Die Werkzeugteile werden wieder geschlossen und das Kunststoff-material wird in die Kavitäten eingespritzt. Das Verfahren wird entsprechend weitergeführt.

Auf diese Weise wird innerhalb von fünf Verfahrensschritten in dem 1. Anguss-System 33 ein Rohling gebildet, der das trägerartige Grundteil 11 aufweist, auf den einseitig oder beidseitig vier Zwischenschichten übereinander und einander überdeckend angeordnet sind, wobei das Grundteil und alle Zwischenschichten aus dem gleichen Kunststoffmaterial bestehen. In einem anschließenden Verfahrensschritt wird dieser Rohling dem 1. Anguss-System 33 entnommen und in die weitere 6. Kavität 27 des 2. Anguss-Systems 34 eingesetzt und dort entweder einseitig oder beidseitig mit einer äußeren Schicht überspritzt, wobei das für die äußere Schicht verwendete Kunststoffmaterial dem Kunststoff-Vorrat 30 des 2. Anguss-Systems 34 entnommen wird. Dabei kann es sich um das gleiche Kunststoffmaterial wie das Kunststoffmaterials des 1. Anguss-Systems 33 oder auch um ein davon unterschiedliches Kunststoffmaterial handeln.

Nach Aufbringung der äußeren Schicht ist der Spritzvorgang abgeschlossen und die Kunststoff-Linse schichtweise hergestellt, wobei in üblicher Weise eventuelle Nacharbeiten vorgenommen werden können.

Die die Kunststofflinse bildenden Schichten sind zu einem monolithischen, einstückigen Körper verbunden, an dem zwischen den Schichten keine Grenzflächen zu erkennen sind.

Da die äußere Schicht in einem eigenen 2. Anguss-System 34 hergestellt wird, können die für die Herstellung der äußeren Schicht wirksamen Verfahrensparameter optimal an die Erfordernisse der äußeren Schicht angepasst werden, während das Grundteil und die Zwischenschichten in dem 1. Anguss-System 33 mit einer Parameter-Konstellation her-gestellt werden, die eine schnelle Herstellung des Rohlings in guter Qualität ermöglicht.

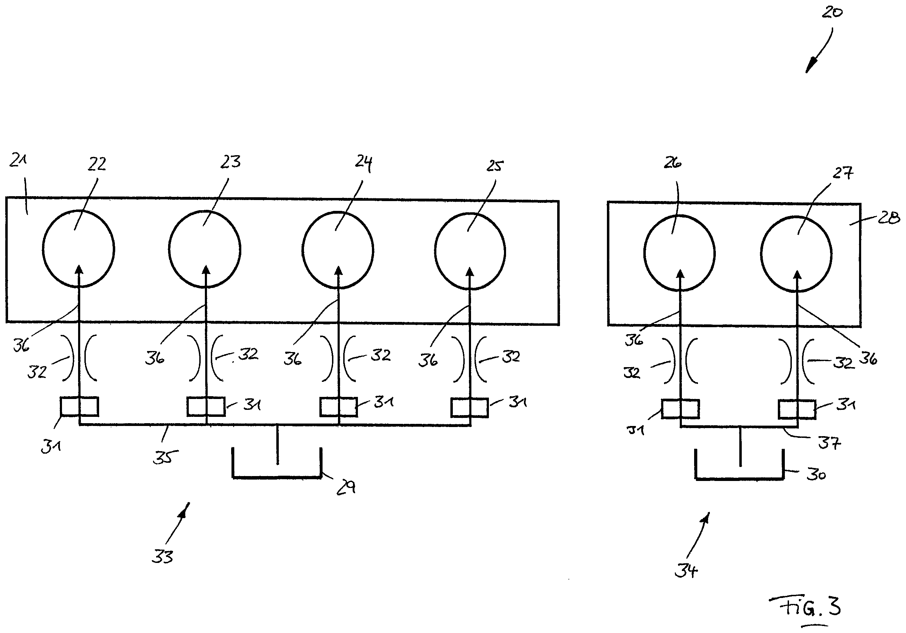

Figur 3 zeigt eine Spritzguss-Vorrichtung 20 in Form einer Abwandlung der Spritzguss-Vorrichtung gemäß Figur 2. Die Spritzguss-Vorrichtung 20 gemäß Figur 3 unterscheidet sich von der Spritzguss-Vorrichtung gemäß Figur 2 dadurch, dass in dem 2. Anguss-System 34 nacheinander sowohl die letzte Zwischenschicht als auch die äußere Schicht ausgebildet werden, während in dem 1. Anguss-System 33 lediglich das Grundteil und die drei Zwischenschichten ausgebildet werden. Zu diesem Zweck sind in dem Werkzeugteil 28 des 2. Anguss-Systems 34 sowohl die 5. Kavität 26 als auch die weitere 6. Kavität 27 ausgebildet, die aus dem Kunststoff-Vorrat 30 über einen Zuführkanal 37 und jeweils ein Spritzkanal 36 mit Kunststoffmaterial versorgt werden können. In jedem Spritzkanal 36 ist in genannter Weise eine Temperatur-Steuervorrichtung 31 und eine Druck-Steuervorrichtung 32 vorgesehen. Der zwischen dem 1. Anguss-System 33 und dem 2. Anguss-System 34 umzusetzende Rohling umfasst in diesem Fall das trägerartige Grundteil 11 sowie drei einseitig oder zweiseitig aufgebrachte Zwischenschichten. Nach dem Umsetzen des Rohlings in das zweite Anguss-System 34 wird dort in der 5. Kavität 26 die letzte Zwischenschicht angespritzt, woraufhin anschließend in einem weiteren Verfahrensschritt die äußere Schicht in der weiteren 6. Kavität 27 angespritzt wird.

## Patentansprüche

1. Verfahren zur Herstellung einer mehrschichtigen Kunststoff-Linse (10), wobei mehrere Zwischenschichten (12, 13) eines Kunststoffmaterials nacheinander in einer Spritzguss-Vorrichtung (20) an ein Grundteil (11) in unterschiedlichen Kavitäten (23, 24, 25, 26) angespritzt werden, wobei zumindest einige der Kavitäten (23, 24, 25, 26) ein gemeinsames 1. Angusssystem (33) mit einer gemeinsamen Materialzuführung aufweisen, wobei anschließend mittels eines 2. Angusssystems (34) zumindest eine äußere Schicht (14) aus einem Kunststoffmaterial in einer weiteren Kavität (27) angespritzt wird, wobei jeder Kavität (22, 23, 24, 25, 26, 27) ein Spritzkanal (36) zugeordnet ist, durch den das Kunststoff-Material in die Kavität eingebracht wird, wobei das 2. Angusssystem (34) eine eigene Materialzuführung und eine eigene Steuerung aufweist und der Druck und die Temperatur des Kunststoff-Materials in zumindest einigen der Spritzkanäle (36) unabhängig voneinander gesteuert wird.

2. Verfahren nach Anspruch 1, **dadurch gekennzeichnet, dass** die Steuerung des 2. Angusssystems (34) eine Temperatur-Steuervorrichtung (31) und eine Druck-Steuervorrichtung (32) aufweist.

3. Verfahren nach Anspruch 1 oder 2, **dadurch gekennzeichnet, dass** mittels des 2. Angusssystems (34) nur die äußere Schicht (16) der Kunststoff-Linse (10) gespritzt wird.

4. Verfahren nach Anspruch 1 oder 2, **dadurch gekennzeichnet, dass** mittels des 2. Angusssystems (34) die äußere Schicht (14) und zumindest eine darunterliegende Zwischenschicht (13) der Kunststoff-Linse (10) gespritzt wird.

5. Verfahren nach einem der Ansprüche 1 bis 4, **dadurch gekennzeichnet, dass** das Grundteil (11) in einem 1. Schritt in der Spritzguss-Vorrichtung (20) in einer Grundteil-Kavität (22) hergestellt wird.

6. Verfahren nach Anspruch 5, **dadurch gekennzeichnet, dass** die das Grundteil (11) ausbildende Grundteil-Kavität (22) ein Teil des 1. Angusssystems (33) ist.

7. Verfahren nach einem der Ansprüche 1 bis 6, **dadurch gekennzeichnet, dass** das Grundteil (11) und die Zwischenschichten (12, 13) aus dem gleichen Kunststoff-Material bestehen.

8. Verfahren nach einem der Ansprüche 1 bis 7, **dadurch gekennzeichnet, dass** die äußere Schicht (14) aus dem gleichen Kunststoff-Material wie die Zwischenschichten (12, 13) besteht.

9. Verfahren nach einem der Ansprüche 1 bis 8, **dadurch gekennzeichnet, dass** zumindest einige der Zwischenschichten (12, 13) und/oder die äußere Schicht (14) in Form von zwei Teil-Schichten auf entgegengesetzten Seiten des Grundteils (11) bzw. eines aus dem Grundteil (11) und zumindest einer Zwischenschicht (12, 13) bestehenden Rohlings aufgespritzt werden.

10. Verfahren nach einem der Ansprüche 1 bis 9, **dadurch gekennzeichnet, dass** die in die einzelnen Kavitäten (22, 23, 24, 25, 26) des 1. Angusssystems (33) eingebrachte Massen des Kunststoff-Materials voneinander um max. ± 10% abweichen.

11. Verfahren nach Anspruch 10, **dadurch gekennzeichnet, dass** die in die einzelnen Kavitäten (22, 23, 24, 25, 26) des 1. Angusssystems (33) eingebrachte Massen des Kunststoff-Materials voneinander um max. ± 5% abweichen.

12. Verfahren nach Anspruch 11, **dadurch gekennzeichnet, dass** die in die einzelnen Kavitäten (22, 23, 24, 25, 26) des 1. Angusssystems (33) eingebrachte Massen des Kunststoff-Materials voneinander um max. ± 1% abweichen.

13. Verfahren nach einem der Ansprüche 10 bis 12, **dadurch gekennzeichnet, dass** der Druck des Kunststoff-Materials in allen Spritzkanälen (36) unabhängig voneinander gesteuert wird.

14. Verfahren nach einem der Ansprüche 1 bis 13, **dadurch gekennzeichnet, dass** die einzelnen Zwischenschichten (12, 13) der Kunststoff-Linse (10) in unterschiedlichen Schichtdicken ausgebildet werden, wobei die Schichtdicke einer (n+1)-ten Schicht geringer als die Schichtdicke der vorher ausgebildeten n-ten Schicht ist.

## Claims

1. Method for manufacturing a multilayer plastic lens (10), wherein a plurality of intermediate layers (12, 13) of a plastic material are injected one after the other onto a basic part (11) in an injection molding device (20) in different cavities (23, 24, 25, 26), wherein at least some of the cavities (23, 24, 25, 26) have a common first runner system (33) with a common material feed, wherein at least one outer layer (14) is subsequently injected from a plastic material in another cavity (27) by means of a second runner system (34), wherein an injection channel (36), through which the plastic material is inserted into the cavity, is associated with each cavity (22, 23, 24, 25, 26, 27), wherein the second runner system (34) has a material feed of its own and a control of its own, and wherein the pressures and the temperatures of the plastic material are controlled independently from one another in at least some of the injection channels (36).

2. Method in accordance with claim 1, **characterized in that** the control of the second runner system (34) has a temperature control device (31) and a pressure control device (32).

3. Method in accordance with claim 1 or 2, **characterized in that** only the outer layer (16) of the plastic lens (10) is injected by means of the second runner system (34).

4. Method in accordance with claim 1 or 2, **characterized in that** the outer layer (14) and at least one intermediate layer (13) of the plastic lens (10), which layer is located under it, are injected by means of the second runner system (34).

5. Method in accordance with one of the claims 1 through 4, **characterized in that** the basic part (11) is manufactured in a first step in the injection molding device (20) in a cavity (22).

6. Method in accordance with claim 5, **characterized in that** the basic part cavity (22) forming the basic part (11) is part of the first runner system (33).

7. Method in accordance with one of the claims 1 through 6, **characterized in that** the basic part (11) and the intermediate layers (12, 13) consist of the same plastic material.

8. Method in accordance with one of the claims 1 through 7, **characterized in that** the outer layer (14) consists of the same plastic material as the intermediate layers (12, 13, 14, 15).

9. Method in accordance with one of the claims 1 through 8, **characterized in that** at least some of the intermediate layers (12, 13) and/or the outer layer (14) are injected in the form of two partial layers on opposite sides of the basic part (11) or of a blank comprising the basic part (11) and at least one intermediate layer (12, 13).

10. Method in accordance with one of the claims 1 through 9, **characterized in that** the masses of the plastic material inserted into the individual cavities (22, 23, 24, 25, 26) of the first runner system (33) differ from one another by a maximum of ±10%.

11. Method in accordance with claim 10, **characterized in that** the masses of the plastic material inserted into the individual cavities (22, 23, 24, 25, 26) differ from one another by a maximum of ±5%.

12. Method in accordance with claim 11, **characterized in that** the masses of the plastic material inserted into the individual cavities (22, 23, 24, 25, 26) of the first runner system (33) differ from one another by a maximum of ±1%.

13. Method in accordance with one of the claims 10 through 12, **characterized in that** the pressures are controlled independently from one another in all injection channels (36).

14. Method in accordance with one of the claims 1 through 13, **characterized in that** the individual intermediate layers (12, 13) of the plastic lens (10) are formed with different layer thicknesses, the layer thickness of an (n+1)th layer being smaller than the layer thickness of the nth layer formed previously.

## Revendications

1. Procédé de fabrication d'une lentille en plastique (10) multicouches, plusieurs couches intermédiaires (12, 13) d'un matériau en plastique étant injectées les unes après les autres dans un dispositif de moulage par injection (20), dans différentes cavités (23, 24, 25, 26) au niveau d'une partie de fond (11), au moins quelques-unes des cavités (23, 24, 25, 26) comportant un 1^{er} système de coulée (33) commun avec une amenée de matériau commune, ensuite, à l'aide d'un 2^{e} système de coulée (34), au moins une couche extérieure (14) composée d'un matériau en plastique étant injectée contre elle dans une cavité (27) supplémentaire, un canal d'injection (36) à travers lequel le matériau en plastique est amené dans la cavité étant associé à chaque cavité (22, 23, 24, 25, 26, 27) ;
le 2^{e} système de coulée (34) présentant une amenée de matériau propre et un élément de commande propre et la pression et la température du matériau en plastique étant commandées indépendamment l'une de l'autre dans au moins quelques-uns des canaux d'injection (36).

2. Procédé selon la revendication 1, **caractérisé en ce que** l'élément de commande du 2^{e} système de coulée (34) comporte un dispositif de commande de température (31) et un dispositif de commande de pression (32).

3. Procédé selon la revendication 1 ou 2, **caractérisé en ce que** seule la couche extérieure (16) de la lentille en plastique (10) est injectée à l'aide du 2^{e} système de coulée (34).

4. Procédé selon la revendication 1 ou 2, **caractérisé en ce que** la couche extérieure (14) et au moins une couche intermédiaire (13), se trouvant en dessous, de la lentille en plastique (10) sont injectées à l'aide du 2^{e} système de coulée (34).

5. Procédé selon l'une quelconque des revendications 1 à 4, **caractérisé en ce que** la partie de fond (11) est fabriquée au cours d'une 1^{ère} étape dans le dispositif de moulage par injection (20), dans une cavité de partie de fond (22).

6. Procédé selon la revendication 5, **caractérisé en ce que** la cavité de partie de fond (22) formant la partie de fond (11) fait partie du 1^{er} système de coulée (33).

7. Procédé selon l'une quelconque des revendications 1 à 6, **caractérisé en ce que** la partie de fond (11) et les couches intermédiaires (12, 13) sont fabriquées à partir du même matériau en plastique.

8. Procédé selon l'une quelconque des revendications 1 à 7, **caractérisé en ce que** la couche extérieure (14) est fabriquée à partir du même matériau en plastique que les couches intermédiaires (12, 13).

9. Procédé selon l'une quelconque des revendications 1 à 8, **caractérisé en ce qu'**au moins quelques-unes des couches intermédiaires (12, 13) et/ou la couche extérieure (14) sont injectées sous la forme de deux couches partielles sur les côtés opposés de la partie de fond (11) et/ou d'une ébauche composée de la partie de fond (11) et d'au moins une couche intermédiaire (12, 13).

10. Procédé selon l'une quelconque des revendications 1 à 9, **caractérisé en ce que** les masses de matériau en plastique amenées dans les cavités individuelles (22, 23, 24, 25, 26) du 1^{er} système de coulée (33) diffèrent les unes des autres de max. ± 10 %.

11. Procédé selon la revendication 10, **caractérisé en ce que** les masses de matériau en plastique amenées dans les cavités individuelles (22, 23, 24, 25, 26) du 1^{er} système de coulée (33) diffèrent les unes des autres de max. ± 5 %.

12. Procédé selon la revendication 11, **caractérisé en ce que** les masses de matériau en plastique amenées dans les cavités individuelles (22, 23, 24, 25, 26) du 1^{er} système de coulée (33) diffèrent les unes des autres de max. ± 1 %.

13. Procédé selon l'une quelconque des revendications 10 à 12, **caractérisé en ce que** la pression du matériau en plastique est commandée indépendamment dans tous les canaux d'injection (36).

14. Procédé selon l'une quelconque des revendications 1 à 13, **caractérisé en ce que** les couches intermédiaires (12, 13) individuelles de la lentille en plastique (10) sont réalisées dans différentes épaisseurs de couche, l'épaisseur de couche d'une couche (n+1) étant plus réduite que l'épaisseur de couche de la couche n réalisée avant elle.
